# EUROPEAN PATENT SPECIFICATION

(11) **EP 0 899 998 B1**
(45) Date of publication and mention of the grant of the patent: **28.08.2002**
(21) Application number: 96919179.0
(22) Date of filing: 04.06.1996
(51) Int. Cl.: A01D 34/00

(54) **ROTARY FLAIL FEEDING DEVICE**
ZUFUHRVORRICHTUNG FÜR SCHLEGELMÄHER
ALIMENTATION D'UNE DEBROUISSAILLEUSE A FIL

(30) Priority: 07.06.1995 US 472188; 01.05.1996 US 637044
(43) Date of publication of application: 10.03.1999
(60) Divisional application: 01203135.7
(73) Proprietor: Berfield, Robert C., Jersey Shore, Pennsylvania 17740-9240 (US)
(72) Inventor: Berfield, Robert C., Jersey Shore, Pennsylvania 17740-9240 (US)
(74) Representative: Warren, Keith Stanley
(86) International application number: US9609360
(87) International publication number: WO96039800

(56) References cited:
- US-A- 4 223 440
- US-A- 4 244 103
- US-A- 4 290 200
- US-A- 4 335 510
- US-A- 4 493 151

## Description

The invention relates to a rotary flail feeding device commonly used to trim grass, weeds and light brush.

Prior flail feeding devices include a rotary head, a coiled length of flail line, typically an extruded plastic strand, confined within the head and a mechanism for incrementally feeding the line to one or two flails extending out of the head through feed passages in the outer circumference of the head. The most common flail feeding device includes a central bump button located on the head which is forced against the ground or another surface to actuate an indexing mechanism that feeds lengths of flail line out the head to reestablish the lengths of flails that have been shortened during use. Another type of flail feeding device uses a mechanism which extends a length of line every time the device head is slowed from a high operating speed. A flail feeding device with an automatic adjustment is known from US-A-4 244 103.

Problems are encountered in conventional flail feeding devices. The bump button device includes complicated springs, ratchets and wear surfaces which during use tend to become gummed with mud, wet grass and the like so the device does not dispense additional line to the flails as required. These devices are massive, include many parts and are relatively expensive to manufacture and assemble. Further, maintenance of dynamic balance is difficult with these types of devices. The bump-type heads run at a high rotational speed requiring that the head be balanced in order to prevent undesired vibration. Indexing of the heads to dispense flail line can destroy the dynamic balance of the head.

Additionally, with the bump-type heads the flail line is fed from the inside of the coil confined in the head radially outwardly through the discharge opening. During feeding of the line, the head is subjected to sharp shocks which tend to jam the line in the coil and prevent smooth feeding line to replenish the length of the flail. Clearing a jammed coil requires disassembly of the head, an awkward and time-consuming procedure.

The heads with automatic line feed in response to the rotation of the head have the disadvantage of always feeding additional line to the flail when the head is slowed, independent of whether additional line is actually required. In these heads, extra line fed to the flail is cut off and wasted each time the head is slowed from a high operational speed.

It is an object of the present invention to provide a rotary flail feeding device for cutting grass, weeds, small shrubs and the like which during use automatically maintains the length of the flail or flails, without operator intervention.

The invention consists in a rotary flail feeding device comprising a rotary head having opposed sides extending transversely to its axis of rotation, a support member rotatable with the head and adapted to attach the head to a rotary drive for rotating the head about the axis, and an annular line storage cavity inside the head extending around and located a distance radially outwardly from the axis, characterized by a line winding member disposed centrally of and rotatable with the head, said winding member extending along the axis to an end at one side of the head, a line winding surface on the winding member adjacent said one side of the head, an annular outlet opening on said one side of the head extending around the end of the winding surface, and a 360 degree line feeding passage in the head extending from the storage cavity, past the winding surface and to the outlet opening.

In one embodiment, the annular storage cavity surrounds the rotational axis of the head and the annular outlet opening on said one side of the head surrounds the axis inside the storage cavity. A coil of flail line is held in the storage cavity and is fed radially inwardly and out the opening to provide a single flail or a pair of flails extending radially outwardly from the opening. The line extending from the cavity to the opening is wound around a central post constituting the line winding member in a direction opposite to the direction of rotation of the head and is automatically unwound from the post to increase the length of the flail or flails in response to shortening the flails during use.

Operation of the flail feeding device automatically maintains each flail at a proper operating length, without the necessity of a bump drive with an indexing mechanism or stopping and restarting the head to feed line. Inward feeding of the line from the storage cavity to and around the post and then out the opening prevents line jams.

The disclosed flail feeding device may be used with a single flail or, preferably, with two flails which are held 180 degrees apart to maintain balance and prevent vibration.

When the disclosed device is stopped the line wound around the central post expands and frictionally engages a rotary line directing member to prevent undesired lengthening of the flail and waste of flail line.

The device according to the invention has few parts and may be manufactured inexpensively and assembled rapidly and cheaply. The simple construction of the device assures a long operational life. The construction with an annular flail feed opening resists entry of foreign matter into the head.

The invention also consists in a method of operating a rotary flail of the type having a rotary head with an annular line storage cavity and a larger diameter coil of flail line in the cavity, comprising the steps of:
a) rotating the head and coil in a direction about an axis extending through the center of said cavity, and
b) winding rotating flail line from the coil around a surface at the center of the cavity surrounding the axis in a direction opposite to the direction of rotation of the head around the axis to form a smaller diameter coil of line on the surface, and extending the flail line out of the head through an annular opening at an end of the surface and radially from the opening to form a flail having a free end.

In order that the present invention may be more readily understood, reference will now be made to the accompanying drawings, in which:-
Figure 1 is a vertical section taken through the head of a first embodiment of rotary flail feeding device according to the invention;
Figure 2 is a view taken generally along line 2-2 of figure 1;
Figure 3 is a vertical section taken through the line directing member shown in Figures 1 and 2;
Figure 3A is a bottom view of the line directing member;
Figure 4 is a generalized horizontal bottom view of the head shown in Figure 1 with portions of the head removed and showing flails and line wound in the head in a first direction;
Figure 5 is a side view similar to Figure 4 showing the line wound in the head in a second direction;
Figure 6 is a vertical section through a line cartridge; and
Figure 7 is a vertical section of a second embodiment of rotary flail feeding device using a cartridge as shown in Figure 6.

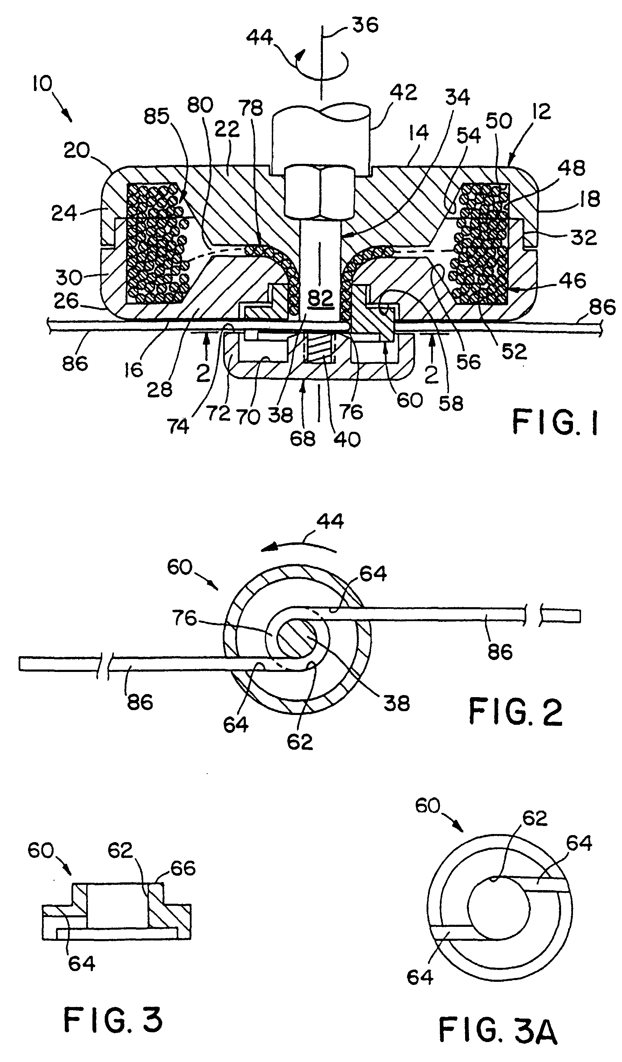

A first embodiment of the rotary flail feeding device 10 is illustrated in Figures 1-5 of the drawings. Device 10 includes a rotary head 12 with flat opposed circular top and bottom sides 14 and 16 and a cylindrical outer surface 18 joining the sides. Hub 20 includes a circular top base 22 defining side 14 and an outer circumferential skirt or wall 24 extending from the outer edge of the top base partially across surface 18. Cover 26 includes a central circular bottom base 28 and an outer skirt or circumferential wall 30 extending from the outer edge of the base 28 partially across surface 18. The skirts 24 and 30 are secured together at circumferential joint 32. The hub and cover may be made from suitable material including metal or plastic.

A central post 34 is mounted on hub 20 in alignment with rotational axis 36 of head 12. The post, which may be made of metal, rotates with the head and includes a free cylindrical end 38 extending a short distance past head side 16. Threaded extension 40 extends outwardly from post end 38. Rotary drive support member 42 is mounted on the end of the post at side 14. Drive support member 42 is attached to the output shaft of a conventional rotary drive device, which may be an electric motor or gas powered engine, to rotate the head 12 about axis 36 in the direction of arrow 44. When the head is rotated at a high operational speed a pair of flails extend radially outwardly from the head for trimming grass, weeds, light brush and the like, as will be described.

Annular line storage cavity 46 is formed in head 12 on the inside of skirts 24 and 30 and is defined by interior cylindrical wall 48 on skirts 24 and 30, top and bottom walls 50 and 52 formed in the hub and cover respectively and inwardly sloping frusto-conical guide walls 54 and 56 which extend from the inner edges of walls 50 and 52 toward each other and radially inwardly toward axis 36. Cavity 46 surrounds post 34 and axis 36.

Stepped recess 58 is formed in cover base 28 and surrounds the end 38 of post 34. Stepped line directing member 60, shown in Figures 1-3, is fitted in the recess and surrounds the post end 38. As illustrated in Figure 1, the outer surfaces of the line directing member are spaced from the inner surfaces of the recess to permit free rotation of member 60 in head 12.

The line directing member 60, which may be formed from metal or other suitable material, includes an interior cylindrical line brake surface 62 having a diameter greater than the diameter of the post end 38 which extends through the opening defined by surface 62. Two parallel line directing or guide grooves 64 are formed in the lower surface of member 60 and extend tangentially outwardly in opposite directions from opposed sides of surface 62 to the outer circumferential surface of the member (See Figure 3A). Grooves 64 are spaced apart 180 degrees around the member. When the member is positioned in head 12, as shown in Figure 1, cylindrical locating surface 66 engages the bottom of recess 58 to locate the member in the head with the bottom of the guide grooves 64 at the level of head side 16 to guide the flails along the side.

Circular guiding member 68 is threaded onto post end 40 and includes an annular recess 70 and an outer wall 72 having an upper guide surface 74. The guide surface 74 overlies side 16 outwardly of the stepped recess 58 and is spaced from side 16 a distance slightly greater than the diameter of the flails rotated by head 12. The outer edge of the line directing member 60 extends a distance below surface 74 into recess 70 to assure proper capture of the flails. The surface 74 holds the flails in grooves 64.

Line directing member 60 is spaced radially outwardly from post end 38 to define an annular outlet opening 76 at the end of the post. Annular line feeding passage 78 extends from opening 76 a distance into the head along post 34 and bends 90 degrees away from the post to extend radially outwardly from the post to annular inlet opening 80 opening into storage cavity 46 between the inner ends of walls 54 and 56, as shown in Figure 1. The annular inlet opening 80 is located approximately midway between top and bottom walls 50 and 52. The top wall of passage 78 is defined by cylindrical line winding surface 82 on post 34 and the inner surface of top base 22. The bottom wall of passage 78 is defined by brake surface 62 and the inner surface of bottom base 28. The passage 78 provides unimpeded 360 degree communication between storage cavity 46 and opening 76 and facilitates feeding of flail line from the cavity to the opening.

The width of line feeding passage 78 away from post 34 is less than twice the diameter of the line fed through the passage to prevent lengths of line crossing over each other and assure smooth feeding of the line from cavity 46 through the passage, out opening 76 and to the two flails extending outwardly from the head through guide grooves 64, as illustrated. Adjacent the post, the width of the passage is slightly greater than the diameter of the line.

The loading and operation of flail feeding device 10 will now be described.

Device 10 is loaded with a coil wound from two lengths of stiffly flexible flail line. This line may be extruded plastic line of the type used in conventional rotary flail-type trimming devices. The line is stiffly flexible with an inherent resiliency which tends to straighten bends.

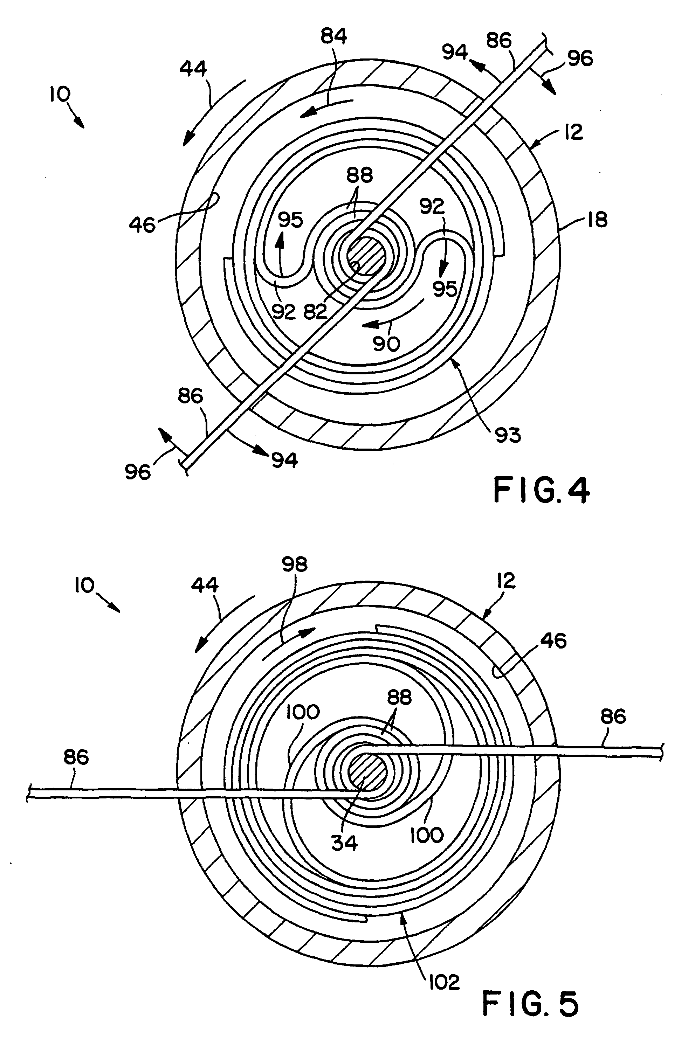

The empty head is loaded with two lengths of flail line by unthreading guiding member 68 from post 34 and removing directing member 60 from recess 58. The ends of a pair of lines to be loaded in the head are arranged side-by-side and are then extended into the exposed end of feeding passage 78 and are pushed through the passage and into storage cavity 46. During insertion, the lines are preferably oriented to wind the two flail lines around the cavity in the direction of arrow 84 shown in Figure 4, the same direction in which the head is rotated as indicated by arrow 44. As the head is gradually rotated in a direction opposite arrow 44, the two lengths of flail line are fed side-by-side through passage 78 and into the storage cavity 46 until the cavity is filled with a coil 85 of line. The free ends of the flail lines are then held against post 34 and directing member 60 is repositioned in recess 58 with the lines extending through the central opening. The two ends are then positioned 180 degrees opposite to each other with respect to the post and are bent away from the post and fitted in guide grooves 64 in member 60, as illustrated in Figure 2. Guiding member 68 is then rethreaded on the end of post 34 so that the two free ends of the flail line are parallel and extend tangentially away from the post in opposite directions and are spaced 180 degrees apart Guide surface 74 on member 68 holds the free ends in place in the grooves and adjacent to head side 16.

As shown in Figure 1, cavity 46 has a relatively large capacity and holds the large coil 85 made up of both lengths of flail line. The two lengths of flail line are wound into the cavity 46 from the inside of the cavity without forming tangles. The resiliency of the flail line holds loops in the coil against the outer wall 48 to facilitate smooth inward feeding of the line from the coil to passage 78 without jams during operation of the head and lengthening of the flails.

After head 12 has been loaded with flail line and assembled as described with the ends of the two lines extending outwardly from the bottom of the head, the rotary drive motor or engine is started to rotate head 12 at an operating speed about axis 36 in the direction of arrow 44.

When head 12 has been accelerated to an operating speed, the two ends of the flail line wound in the head are thrown radially outwardly from post 34 to form a pair of cutting flails 86 shown in Figures 1, 2 and 4. The two flail lines extending from the coil 85, through passage 78 and out opening 76 are tightly spirally wound against each other in the lower inner portion of passage 78. The two lines 88 are wound into and along the passage 78 from cavity 46 to opening 76 in the direction of arrow 90 shown in Figure 4, opposite to the direction of rotation of head 12 as indicated by arrow 44. With the two lines tightly spirally wound in the passage end around surface 82, as described, the two flails 86 extend tangentially outwardly in opposite directions from post 34 so that unwinding of the flails around the rotating post in the direction of arrow 44 will unwind the line from the post and lengthen the flails.

As shown in Figure 4, the lines in coil 93 are wound around head 12 in the direction of rotation of the head and spiral windings 88 are wound into passage 78 and along surface 82 in the opposite direction with the lines in the coil 93 connected to the lines in the spiral windings 88 by stiff 180 degree back loops 92. Loops 92 are sharply bent and are each located to one side of the post 34. The loops do not extend across the post 34. Because the line is stiffly resilient and back loops are sharply bent, the inner ends of the loops are biased toward the post and hold the spiral windings together in passage 78.

During initial rotation of head 12, the flails 86 and back loops 92 are subjected to centrifugal forces. The centrifugal forces acting on the flails 86 hold the spiral winding 88 tight on post winding surface 82. During initial rotation of the head, flails 86 unwind from the rotating post in the direction of arrows 94 and are lengthened. Unwinding is caused by centrifugal forces exerted on the rotating flails. During unwinding, the two spiral coils of line on surface 82 freely slide axially along the post toward opening 76 and additional line is fed radially inwardly through loops 92 onto windings 88 from coil 93. During feeding of line to the windings the loops 92 move around the head in a direction opposite to the direction of rotation of the head, as indicated by arrows 95. Also, during unwinding, the directing member 60 is rotated in head 12 in the direction of rotation of the head, as indicated by arrow 94. The lengths of the flails 86 grow as line is unwound from the post. Additional line from storage cavity 46 is wound into passage 78, onto windings 88 and onto the post.

As the flails lengthen, air drag is exerted on the extending rotating flails. This drag exerts forces on the flails generally in the directions of arrows 96, opposite to the direction of unwinding of the flails as indicated by arrows 94. The flails 86 continue to unwind and lengthen until the air drag forces exerted on the flails prevent further unwinding of the line and maintain the length of the flails. When this condition is reached, the opposed centrifugal and air drag forces are at equilibrium. The lengths of the flails, at equilibrium, is desirably the standard length of the flails in a conventional rotary head.

At equilibrium, the back loops 92 are rotated in the head and centrifugal forces pull these portions radially outwardly away from the post 34 to tighten the line in spiral windings 88 in passage 78 and assist in holding the windings 88 tight on winding surface 82 on the post to assure that the line rotates with the head. The connection between the windings and surface 82 does not prevent axial shifting of the windings down the post toward opening 76 during unwinding and lengthening of flails 86. As the flail line unwinds from post additional line is automatically fed from coil 93 through head 92 and into windings 88 to maintain the windings, as described.

After head 12 has been loaded with flail line as described and rotated to operating speed, the two flails 86 are automatically extended to an operating length. The head may then be used for trimming. During trimming, the line directing member 60 keeps the two flails 86 in 180 degree orientation on the post to maintain dynamic balance for the head.

As head 12 is used the ends of the flails are subject to wear and, in time, line material is broken off from the ends of the flails. When this occurs the air drag exerted on the shortened flails is reduced. Shortening of the flails reduces the air drag forces to a greater extent than the shortening of the flails reduces the centrifugal forces, with the result that equilibrium is destroyed and the centrifugal forces unwind the flails from the rotating post 34 in the forward direction of arrow 94 until the increase in length of the flails increases the air drag sufficiently to reestablish equilibrium between the two forces and reestablishes the length of the flails. During simultaneous lengthening of both flails, member 60 is rotated around post 34 in the direction of rotation of head 12.

If only one flail is shortened, this line is lengthened, as described, and the member 60 is rotated on the head to unwind the other flail a distance around the post until an equilibrium is again established. In this event, the shortened flail will be slightly shorter than the unshortened flail. In time, both flails will wear and have the same length.

The lengths of the flails are automatically maintained, as described, during trimming using head 12, thereby eliminating the necessity of operator intervention to maintain the flail lengths and full trimming efficiency.

Often during trimming and at the end of a trimming job it is necessary to stop rotation of head 12. When the rotational speed of the head is slowed, the spiral windings of coils 88 in passage 78 relax and expand due to the resiliency of the line material. When this happens, the coils on the lower end of the passage at the end of post 38 expand and engage the interior brake surface 62 of directing member 60 so that the member cannot rotate relative to the windings. At this time, the resilient back loops 92 extending between the coils of line material in cavity 46 and the windings hold the windings tightly together to maintain tight windings 88 in the passage. As the head slows, the tight windings in the passage prevent the coils on the end of the post from rotating, thereby holding the directing member 60 against rotation relative to the head so that line material is not fed to the flails and the length of the flails is maintained. The back loops maintain tension in the windings or loops during restarting of the head and rotation back to operating speed to prevent elongation of the flails during start-up, prior to reestablishing equilibrium.

The flail line is fed freely radially inwardly from the coils in cavity 46, past guide walls 54 and 56, through passage end 80 and into the passage 78 without crossover or wedging jams. Once in the passage, the lines are tightly wound together to form spiral windings and move freely through the passage to replace material removed from the ends of the flails and lengthen the flails.

During operation of head 12 directing member 60 rotates relative to the head in the direction of rotation of the head as flail line is fed from the windings 88 out mouth 76 to lengthen flails 86. During this rotation the directing member rotates on the outer surfaces of the line coils or windings on winding surface 82, which serve as a renewable bearing for the directing member. The directing member is preferably formed of material harder than the plastic forming the lines so that wear at the bearing occurs in the line material which is being fed out of the head. This wear is inconsequential to the trimming operation and reduces wear on the directing member. The directing member also rotates on the bottom of recess 58 at rotating surface 66. Axial load is low and wear at this surface is minimal.

The head 12 may be mounted on a conventional type string trimmer with a trimming blade located a distance radially outwardly from the head for trimming overlong flails.

Figure 5 illustrates the interior of head 12 in which line has been wound in cavity 46 in the direction of arrow 98, opposite to the direction of rotation of the head as indicated by arrow 44. Two lengths of flail line are wound into the cavity to fill the cavity. The ends of the line are fed through the passage 78 and out mouth 76. The directing member and guiding members are then mounted on the head 12, as previously described, with the two ends fitted in the guide grooves 64 and extending outwardly away from the post as shown in Figure 2.

Upon initial rotation of the Figure 5 head, the lines are tightly spiral wound in passage 78 with the lower ends of the lines wound around and engaging winding surface 82 as previously described. Flails 86 extend outwardly from the post and are automatically adjusted in length as previously described. The inner ends of the tight spiral windings 88 in passage 78 are connected to the wound coils of line material in cavity 46 by flexible crossing loops 100 which extend inwardly from coil 102 to one side of post 34 and join the tight spiral winding 88 on the opposite side of the post. When the head 12 is slowed to a stop, the crossing loops 100 tend to assume a straight position and tend to open the spiral windings 88, loosen the windings in passage 78 and may permit limited rotation of the directing member relative to the head. Such rotation unwinds short lengths of line from the post and lengthens the flails 86 short distances beyond the equilibrium positions.

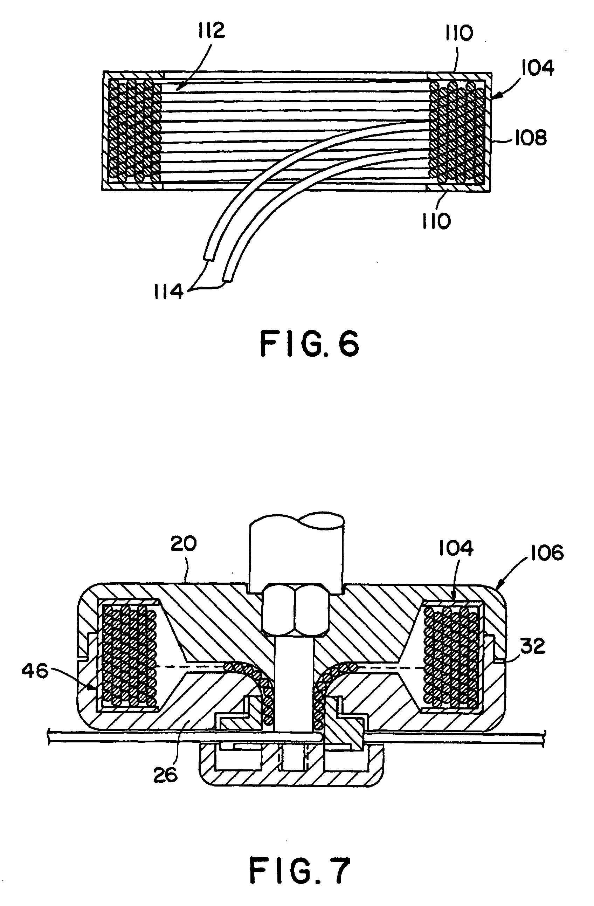

Figure 6 illustrates a flail line cartridge 104 adapted to be loaded in head 106 shown in Figure 7. The cartridge includes a cylindrical wall 108 with a pair of radially inwardly extending flanges 110 on the upper and lower edges of the wall. The wall and flanges define an interior space in which two lengths of flail line are pre-wound to form a coil 112 with free ends 114 extending outwardly through the center of the cartridge.

Head 106 is like head 12 with the exception that the cover 26 is removable from hub 20 at joint 32 to open the storage cavity 46 for reception of the cartridge 104 with prewound coil 112. The cartridge is preferably provided with indicia, such as an arrow extending around the outer surface of one of the flanges 110, to indicate the proper orientation of the cartridge in the head so that during use back loops 92 are formed in the portions of the line extending inwardly to the tight spiral windings in passage 78, as illustrated in Figure 4.

The cartridge with pre-wound line coil is loaded into head 106 by removing the guiding member and directing member, as previously described, opening the head at joint 32 and then placing the cartridge 104 in the portion of the storage recess 46 in the hub. The free line ends 114 are then led along the central surface of the hub and along the end of post 34. These ends are fed through the central opening in cover 26 which is then positioned on the hub to close the head. Directing and guiding members 60 and 68 are then reattached to the head as previously described. The indicia on cartridge 104 facilitates placement of the cartridge in the head with the coil wound into the cartridge in a direction opposite to the direction of rotation of the head for forming of back loops during operation.

After the cartridge has been placed in head 106, as described, the head is rotated by the drive and the lengths of the two flails are extended and adjusted automatically, as previously described.

The described rotary flail feeding devices each include a pair of flails oriented 180 degrees about post 34. The two flails are balanced dynamically and operate smoothly. However, if desired, the disclosed heads may be operated with a single flail, the length of which is automatically adjusted and lengthened as previously described. Line directing member 60 is not required to maintain proper flail length and may be omitted, if desired.

## Claims

1. A flail feeding device (10) comprising a rotary head (12) having opposed sides (14,16) extending transversely to its axis (36) of rotation, a support member (42) rotatable with the head and adapted to attach the head to a rotary drive for rotating the head about the axis (36), and an annular line storage cavity (46) inside the head extending around and located a distance radially outwardly from the axis (36), **characterized by** a line winding member (34) disposed centrally of and rotatable with the head, said winding member extending along the axis (36) to an end (38) at one side (16) of the head, a line winding surface (82) on the winding member adjacent said one side (16) of the head, an annular outlet opening (76) on said one side of the head extending around the end of the winding surface (82), and a 360 degree line feeding passage (78) in the head extending from the storage cavity (46), past the winding surface (82) and to the outlet opening (76).

2. A device as claimed in claim 1 wherein the line feeding passage (78) extends radially inwardly from said storage cavity (46).

3. A device as claimed in claim 1 or 2 wherein the line winding member (34) comprises a substantially cylindrical post (34).

4. A device as claimed in claim 1, 2 or 3 wherein the line feeding passage (78) includes a first portion located adjacent the outlet opening (76) and extending along the axis (36), a bend away from the axis and a second portion extending to the storage cavity (46).

5. A device as claimed in any preceding claim including a line directing member (60) rotatably mounted on said one side (16) of the head (12), said member surrounding the line winding member (34) and having a line brake surface (62) overlying the winding surface (82) and a line guide (64) located radially outwardly from the brake surface.

6. A device as claimed in claim 5 wherein the line directing member (60) includes a second line guide (64), said line guides being located 180 degrees across from each other.

7. A device as claimed in claim 6 wherein each line guide comprises a groove (64), said grooves extending parallel to each other and tangentially in opposite directions away from the outlet opening (76).

8. A device as claimed in claim 5, 6 or 7 including a guiding member (68) on the end (38) of the winding member (34) and overlying the line directing member (60).

9. A device as claimed in any preceding claim wherein the line feeding passage (78) includes a 90 degree bend and opens into the center of the inner wall of the storage cavity (46).

10. A device as claimed in any preceding claim including a length of flail line having a larger diameter wound coil (85 ; 93, 102) in the flail storage cavity (46), a first portion (92, 100) extending from said wound coil radially inwardly into the line feeding passage (78) to the winding surface (82), a smaller diameter coil (88) wound on the line winding surface (82) in a direction opposite to the direction of rotation of the head (12) and a second portion extending from said outlet opening (76) to form a flail (86).

11. A device as claimed in claim 10 wherein the smaller diameter coil (88) extends a distance radially outwardly from the winding surface (82).

12. A device as claimed in claim 10 or 11 wherein said first portion includes a back loop (92) located to one side of the winding member.

13. A device as claimed in any preceding claim wherein the width of said line feeding passage (78) is less than twice the thickness of the flail line.

14. A device as claimed in any preceding claim wherein the storage cavity (46) comprises an annular flail line cartridge (104).

15. The method of operating a rotary flail of the type having a rotary head (12) with an annular line storage cavity (46) and a larger diarneter coil of flail line in the cavity, comprising the steps of:
a) rotating the head (12) and coil in a direction about an axis (36) extending through the center of said cavity, and
b) winding rotating flail line from the coil around a surface (82) at the center of the cavity surrounding the axis in a direction opposite to the direction of rotation of the head around the axis to form a smaller diameter coil (88) of line on the surface, and extending the flail line out of the head through an annular opening (76) at an end (38) of the surface and radially from the opening to form a flail (86) having a free end.

16. The method of claim 15 including the steps of:
c) exerting a centrifugal force on the flail tending to unwind the flail from the surface (82) in the direction of rotation of the head (12) and thereby lengthen the flail,
d) exerting a drag force on the flail tending to wind the flail on the surface (82) in a direction opposite to the direction of rotation of the head and thereby shorten the flail, and
e) maintaining the length of the flail by establishing an equilibrium between the centrifugal force and the drag force.

## Patentansprüche

1. Zufuhrvorrichtung (10) für Schlegelmäher, mit einem Drehkopf (12), der einander gegenüberliegende, quer zu seiner Drehachse (36) sich erstreckende Seiten (14, 16) aufweist, ferner mit einem Tragteil (42), das mit dem Kopf drehbar und dazu eingerichtet ist, den Kopf an einem Drehantrieb zum Drehen des Kopfes um die Achse (36) zu befestigen, und mit einem ringförmigen Seil-Speicherhohlraum (46), der innerhalb des Kopfes ausgebildet ist und sich um die Achse (36) herum erstreckt und von dieser in einem Abstand radial nach außen angeordnet ist, **gekennzeichnet durch** ein Seil-Wickelelement (34), das mittig zum Kopf angeordnet und mit diesem drehbar ist und längs der Achse (36) bis zu einem Ende (38) an einer Seite (16) des Kopfes verläuft, ferner **durch** eine Seil-Wickelfläche (82) auf dem Wickelelement nahe der einen Seite (16) des Kopfes, eine ringförmige, um das Ende der Wickelfläche (82) herumlaufende Auslaßöffnung (76) auf der einen Seite des Kopfes, und **durch** einen 360Grad-Seil-Zufuhrkanal (78) in dem Kopf, wobei sich dieser Zufuhrkanal von dem Speicherhohlraum (46) aus an der Wickelfläche (82) vorbei bis zur Auslaßöffnung (76) erstreckt.

2. Vorrichtung nach Anspruch 1, bei der der Seil-Zufuhrkanal (78) von dem Speicherhohlraum (46) aus radial einwärts verläuft.

3. Vorrichtung nach Anspruch 1 oder 2, bei der das Seil-Wickelelement (34) einen im wesentlichen zylindrischen Pfosten (34) aufweist.

4. Vorrichtung nach Anspruch 1, 2 oder 3, bei der der Seil-Zufuhrkanal (78) einen ersten Abschnitt, der nahe der Auslaßöffnung (76) angeordnet ist und längs der Achse (36) verläuft, ein von der Achse weggerichtetes Winkelstück und einen zweiten Abschnitt aufweist, der zum Speicherhohlraum (46) verläuft.

5. Vorrichtung nach einem der vorhergehenden Ansprüche, mit einem Seil-Leitelement (60), das drehbar auf der einen Seite (16) des Kopfes (12) befestigt ist und das Seil-Wickelelement (34) umgibt und eine Seil-Bremsfläche (62) aufweist, die die Wickelfläche (82) überdeckt, und eine Seilführung (64) aufweist, die radial außerhalb der Bremsfläche angeordnet ist.

6. Vorrichtung nach Anspruch 5, bei der das Seil-Leitelement (60) eine zweite Seilführung (64) aufweist, wobei die Seilführungen 180 Grad einander gegenüber angeordnet sind.

7. Vorrichtung nach Anspruch 6, bei der jede Seilführung eine Nut (64) aufweist, wobei die Nuten parallel zueinander und tangential in entgegengesetzte Richtungen weg von der Auslaßöffnung (76) verlaufen.

8. Vorrichtung nach Anspruch 5, 6 oder 7, mit einem Führungselement (68) an dem Ende (38) des Wickelelementes (34), wobei das Führungselement das Seil-Leitelement (60) überdeckt.

9. Vorrichtung nach einem der vorhergehenden Ansprüche, bei der der Seil-Zufuhrkanal (78) ein 90Grad-Krümmungselement aufweist und in die Mitte der Innenwand des Speicherhohlraums (46) hinein öffnet.

10. Vorrichtung nach einem der vorhergehenden Ansprüche, mit einer Schlegelseil-Länge, die einen mit größerem Durchmesser gewickelten Ring (85, 93, 102) in dem Schlegel-Speicherhohlraum (46), einen ersten Abschnitt (92, 100), der von dem gewickelten Ring aus radial nach innen in den Seil-Zufuhrkanal (78) zur Wickelfläche (82) hineinverläuft, einen Ring (88) mit kleinerem Durchmesser, der auf der Seil-Wickelfläche (82) in einer Richtung gewickelt ist, die der Drehrichtung des Kopfes (12) entgegengesetzt ist, und einen zweiten Abschnitt aufweist, der aus der Auslaßöffnung (76) heraus verläuft, um einen Schlegel (86) zu bilden.

11. Vorrichtung nach Anspruch 10, bei der der Ring (88) mit dem kleineren Durchmesser sich von der Wickelfläche (82) eine Strecke radial nach außen erstreckt.

12. Vorrichtung nach Anspruch 10 oder 11, bei der der erste Abschnitt eine Rückwärtsschleife (92) aufweist, die zu einer Seite des Wickelelementes angeordnet ist.

13. Vorrichtung nach einem der vorhergehenden Ansprüche, bei der die Weite des Seil-Zufuhrkanals (78) geringer ist als die zweifache Dicke des Schlegelseils.

14. Vorrichtung nach einem der vorhergehenden Ansprüche, bei der der Speicherhohlraum (46) eine ringförmige Schlegelseil-Kartusche (104) aufweist.

15. Verfahren zum Betreiben eines Schlegelmähers, der einen Drehkopf (12) mit einem ringförmigen Seil-Speicherhohlraum (46) und einen Schlegelseil-Ring größeren Durchmessers in dem Hohlraum aufweist, mit den folgenden Schritten:
a) Drehen des Kopfes (12) und des Rings in eine Richtung um eine Achse (36), die durch die Mitte des Hohlraums verläuft, und
b) Wickeln des drehenden Schlegelseils von dem Ring um eine Fläche (82) an der Mitte des Hohlraums, wobei die Achse in einer Richtung umkreist wird, die der Drehrichtung des Kopfes um die Achse herum entgegengesetzt ist, um einen Ring (88) kleineren Durchmessers aus Seil an der Fläche zu bilden, und Laufenlassen des Schlegelseils aus dem Kopf heraus durch eine ringförmige Öffnung (76) an einem Ende (38) der Fläche und radial aus der Öffnung heraus, um einen Schlegel (86) mit einem freien Ende zu bilden.

16. Verfahren nach Anspruch 15, mit den folgenden Schritten:
c) Ausüben einer Zentrifugalkraft auf den Schlegel, um den Schlegel von der Fläche (82) in der Drehrichtung des Kopfes (12) abzuwickeln und dadurch den Schlegel zu verlängern,
d) Ausüben einer Widerstandskraft auf den Schlegel, um den Schlegel auf die Fläche (82) in einer Richtung aufzuwickeln, die der Drehrichtung des Kopfes entgegengesetzt ist, und um dadurch den Schlegel zu verkürzen und
e) Beibehalten der Länge des Schlegels durch Herstellen eines Gleichgewichtes zwischen der Zentrifugalkraft und der Widerstandskraft.

## Revendications

1. Dispositif (10) d'alimentation de fil de coupe formant fléau, comprenant une tête rotative (12) ayant des côtés opposés (14, 16) s'étendant transversalement à son axe de rotation (36), un organe de support (42) pouvant tourner avec la tête et étant adapté de façon à fixer la tête à un entraînement en rotation destiné à faire tourner la tête autour de l'axe (36), et une cavité annulaire (46) formant magasin pour le fil de coupe, située à l'intérieur de la tête et d'étendant autour de l'axe (36) et disposée à une certaine distance radialement vers l'extérieur à partir de cet axe, **caractérisé par** un organe d'enroulement de fil (34) disposé en position centrale par rapport à la tête et pouvant tourner avec cette dernière, ledit organe d'enroulement s'étendant le long de l'axe (36) jusqu'à une extrémité (38) sur un côté (16) de la tête, une surface (82) d'enroulement du fil située sur l'organe d'enroulement au voisinage immédiat dudit un côté (16) de la tête, une ouverture de sortie annulaire (76) sur ledit un côté de la tête s'étendant autour de l'extrémité de la surface d'enroulement (82), et un passage (78) d'alimentation du fil de coupe à 360 degrés, aménagé dans la tête et d'étendant de la cavité (46) formant magasin à l'ouverture de sortie (76), en passant par la surface d'enroulement (82).

2. Dispositif selon la revendication 1, dans lequel le passage (78) d'alimentation du fil s'étend radialement vers l'intérieur à partir de ladite cavité formant magasin.

3. Dispositif selon la revendication 1 ou 2, dans lequel l'organe (34) d'enroulement du fil comprend un montant essentiellement cylindrique (34).

4. Dispositif selon la revendication 1, 2 ou 3, dans lequel le passage (78) d'alimentation du fil comprend une première portion située au voisinage immédiat de l'orifice de sortie (76) et s'étendant le long de l'axe (36), un coude partant de l'axe, et une deuxième portion s'étendant vers la cavité formant magasin.

5. Dispositif selon l'une quelconque des revendications précédentes, qui comprend un organe (60) d'orientation de fil, monté en rotation sur ledit un côté (16) de la tête (12), ledit organe entourant l'organe (34) d'enroulement du fil et ayant une surface (62) de freinage du fil recouvrant la surface d'enroulement (82) et un guide-fil (64) situé radialement vers l'extérieur par rapport à la surface de freinage.

6. Dispositif selon la revendication 5, dans lequel l'organe d'orientation de fil (60) comprend un deuxième guide-fil (64), lesdits guide-fils étant situés à 180 degrés en travers l'un de l'autre.

7. Dispositif selon la revendication 6, dans lequel chaque guide-fil comprend une rainure (64), lesdites rainures s'étendant parallèlement l'une à l'autre et s'écartant tangentiellement, dans des directions opposées, de l'ouverture de sortie (76).

8. Dispositif selon la revendication 5, 6 ou 7, qui comprend un organe de guidage (68) sur l'extrémité (38) de l'organe d'enroulement (34) et recouvrant l'organe d'orientation de fil.

9. Dispositif selon l'une quelconque des revendications précédentes, dans lequel le passage (78) d'alimentation du fil comprend un coude à 90 degrés et débouche au centre de la paroi intérieure de la cavité (46) formant magasin.

10. Dispositif selon l'une quelconque des revendications précédentes, qui comprend une certaine longueur de fil de coupe, ayant une bobine d'enroulement (85, 93, 102) de grand diamètre dans la cavité (46) formant magasin pour le fil de coupe, une première portion (92, 100) s'étendant à partir de ladite bobine d'enroulement, en pénétrant dans le passage (78) d'alimentation du fil et jusqu'à la surface d'enroulement (82), une bobine (88) de petit diamètre enroulée sur la surface (82) d'enroulement du fil dans une direction opposée au sens de rotation de la tête (12), et une deuxième portion s'étendant à partir de ladite ouverture de sortie (76) pour former un fil de coupe en fléau (86).

11. Dispositif selon la revendication 10, dans lequel la bobine (88) de petit diamètre s'étend sur une certaine distance radialement vers l'extérieur à partir de la surface d'enroulement (82).

12. Dispositif selon la revendication 10 ou 11, dans lequel ladite première portion comprend une boucle en retour (92) située sur un côté de l'organe d'enroulement.

13. Dispositif selon l'une quelconque des revendications précédentes, dans lequel la largeur dudit passage (78) d'alimentation du fil est égale à moins du double de l'épaisseur du fil de coupe.

14. Dispositif selon l'une quelconque des revendications précédentes, dans lequel la cavité (46) formant magasin comprend une cartouche annulaire (104) pour fil de coupe.

15. Procédé d'utilisation d'une tondeuse à fil tournant en fléau du type ayant une tête rotative (12) et une cavité annulaire (46) formant magasin pour le fil de coupe, avec dans la cavité une bobine de grand diamètre, comprenant les étapes consistant :
a) à faire tourner la tête (12) et la bobine dans une direction autour d'un axe (36) passant par le centre de ladite cavité, et
b) à enrouler le fil de coupe tournant et provenant de la bobine, autour d'une surface (82) au centre de la cavité entourant l'axe dans une direction opposée au sens de rotation de la tête autour de l'axe, pour former une bobine de fil (88) de petit diamètre sur la surface, et à faire sortir le fil de coupe de la tête en le faisant passer à travers une ouverture annulaire (76) à une extrémité de la surface et radialement à partir de l'ouverture, pour former un fil en fléau ayant une extrémité libre.

16. Procédé selon la revendication 15, comprenant les étapes consistant :
c) à exercer une force centrifuge sur le fil en fléau, qui tend à dérouler le fil de la surface (82) dans le sens de rotation de la tête (12), de façon à augmenter la longueur du fil en fléau,
d) à exercer une force de tirage sur le fil en fléau, qui tend à enrouler le fil en fléau sur la surface (82) dans une direction opposée au sens de rotation de la tête, pour de ce fait raccourcir le fil en fléau, et
e) à maintenir la longueur du fil en fléau en établissant un équilibre entre la force centrifuge et la force de tirage.
